(19) Europäisches Patentamt
European Patent Office
Office européen des brevets

(11) **EP 2 539 989 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
*H02J 7/14* *(2006.01)*     *H02J 7/34* *(2006.01)*
*H01M 8/04* *(2006.01)*     *B60L 11/18* *(2006.01)*
*H01M 16/00* *(2006.01)*     *B60L 11/00* *(2006.01)*

(21) Anmeldenummer: **11707790.9**

(22) Anmeldetag: **18.02.2011**

(86) Internationale Anmeldenummer:
**PCT/EP2011/000799**

(87) Internationale Veröffentlichungsnummer:
**WO 2011/103987 (01.09.2011 Gazette 2011/35)**

(54) **ANTRIEBSSYSTEM UND ARBEITSMASCHINE**

DRIVE SYSTEM AND MACHINE

SYSTÈME D'ENTRAÎNEMENT ET MACHINE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2010 DE 102010008917**

(43) Veröffentlichungstag der Anmeldung:
**02.01.2013 Patentblatt 2013/01**

(73) Patentinhaber: **Liebherr-Components Biberach GmbH**
**88400 Biberach/Riß (DE)**

(72) Erfinder: **MAHDAVI TABATABAEI, Nejat**
**88131 Lindau (DE)**

(74) Vertreter: **Laufhütte, Dieter et al**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**EP-A1- 1 090 874**     **JP-A- 2003 276 983**
**JP-A- 2006 236 619**     **JP-A- 2006 318 818**
**US-A1- 2002 172 847**     **US-A1- 2003 118 876**
**US-A1- 2005 249 985**     **US-A1- 2006 127 704**

**Beschreibung**

Die vorliegende Erfindung betrifft ein Antriebssystem mit Energierückgewinnung zum Antrieb einer Arbeitsmaschine, wobei das Antriebssystem wenigstens eine Brennstoffzelleneinheit, wenigstens eine kapazitive Energiespeichereinheit und wenigstens einen Antriebsmotor aufweist. Ferner bezieht sich die vorliegende Erfindung auf eine Arbeitsmaschine mit einem derartigen Antriebssystem.

Derzeit bekannte Arbeitsmaschinen, insbesondere Krane, weisen in der Regel ein Antriebssystem auf, das zumindest aus einem Antriebsmotor zum Betrieb eines Hubwerks bzw. zum Antrieb eines Fahrwerks besteht. Zur Energieversorgung des Antriebssystems steht eine Dieselgeneratoreinheit zur Verfügung, die als primäre Energiequelle genutzt wird.

Antriebssysteme, die auf eine Brennstoffzelleneinheit als Energiequelle setzen, finden derzeit Anwendung im Kfz-Bereich. Anstelle des Verbrennungsmotors steht eine Brennstoffzelle, die den Elektromotor des Antriebssystems mit Energie speist. Zur Energierückgewinnung steht ein elektrischer Energiespeicher zur Speicherung der rückgewonnenen Energie zur Verfügung. Beispielsweise wird die kinetische Energie des Fahrzeugs während des Bremsvorgangs mittels des Elektromotors, der als Generator arbeitet, in elektrische Energie gewandelt und durch den elektrischen Energiespeicher aufgenommen. Oftmals dient der elektrische Energiespeicher nicht nur zur Speicherung der elektrischen Energie, sondern soll vielmehr bei auftretenden Spannungsspitzen bzw. Lastspitzen die Brennstoffzelle unterstützen. Hierzu werden die Brennstoffzelle und der elektrische Energiespeicher jeweils über einen DC/DC-Wandler mit dem Antriebsaggregat verschaltet.

US2002172847 betrifft ein Brennstoffzelle-Stromversorgungssystem mit einer Brennstoffzelle und einem Kondensator, die parallel zueinander verbunden sind.

US2003118876 offenbart eine Energieversorgungsvorrichtung mit Brennstoffzelle und Kondensator. Die Energieversorgungsvorrichtung beinhaltet ein Brennstoffzellensystem, einen Kondensator und eine Sekundärbatterie, welche parallel mit einer Verdrahtung verbunden sind.

JP2006236619 und JP006318818 offenbaren eine Brennstoffzelle-Energieversorgungsvorrichtung mit einer Brennstoffzelle und einem Kondensator, der parallel mit der Brennstoffzelle verbunden ist.

US2006127704 betrifft ein Brennstoffzellensystem, das einen Kondensator und eine Batterie verwendet, die elektrisch in Reihe miteinander und parallel zu einem Brennstoffzellenstapel an einer Leistungsbusleitung gekoppelt sind.

Es ist die Aufgabe der vorliegenden Erfindung ein bekanntes Antriebssystem durch gezielte Maßnahmen zu vereinfachen und kostengünstiger zu gestalten. Ferner besteht die Aufgabe der vorliegenden Erfindung darin, eine bekannte Arbeitsmaschine weiterzubilden, um einen ökonomischeren und umweltfreundlicheren Betrieb zu ermöglichen.

Die vorliegende Aufgabe wird durch ein Antriebssystem mit Energierückgewinnung zum Antrieb einer Arbeitsmaschine mit den Merkmalen des Anspruchs 1 gelöst. Demnach weist das Antriebssystem wenigstens eine Brennstoffzelleneinheit, wenigstens eine kapazitive Energiespeichereinheit und wenigstens einen Antriebsmotor auf. Zur Realisierung der Energierückgewinnung ist eine Parallelschaltung der Brennstoffzelleneinheit und der Energiespeichereinheit vorgesehen, wobei die Komponenten der Parallelschaltung den Antriebsmotor wahlweise zeitgleich oder separat mit Energie speisen.

Die elektrische Energiespeichereinheit ist zur Energierückgewinnung vorgesehen. Dient das erfindungsgemäße Antriebssystem beispielsweise als Kranantrieb, so läßt sich eine Energierückgewinnung während des Absenkens einer angeschlagenen Last erzielen. Hierzu arbeitet der Antriebsmotor des Hubwerks als Generator, der während des Absenkens der Last die elektrische Energiespeichereinheit auflädt. Denkbar ist auch die Energierückgewinnung aus einem Bremsvorgang des Krans. Die Energiespeisung des Antriebsmotors des erfindungsgemäßen Krans kann vollständig oder zumindest teilweise aus der Energiespeichereinheit erfolgen.

Denkbar ist, dass die Brennstoffzelleneinheit nur zu Zeitpunkten mit hohen Lastspitzen unterstützend zur Energiespeichereinheit den Antriebsmotor mit Energie speist. Bevorzugt lässt sich auch eine umgekehrte Realisierung umsetzen, die die Energiespeichereinheit als unterstützende Energiequelle vorsieht. Ferner kann vorgesehen sein, dass die Energiespeichereinheit insbesondere während Betriebspausen des Antriebssystems mittels der Brennstoffzelleneinheit aufladbar ist.

Zur Realisierung der erfindungsgemäßen Lösung wird auf die teuren und voluminösen DC/DC-Wandler zur gegenseitigen Entkopplung der beiden Energiequellen verzichtet. Da Brennstoffzelleneinheit und kapazitive Energiespeichereinheit unterschiedliche Spannungsprofile besitzen, führt die unmittelbare Parallelschaltung dieser Einheiten zu einer erhöhten Belastung der beiden Komponenten. Die unterschiedliche Bauteilcharakteristik beider Komponenten führt dazu, dass sich ein unterschiedlicher Spannungsabfall, insbesondere unter Volllast, an den Komponenten einstellt. Da die internen Widerstände der Energiespeichereinheit bzw. der Brennstoffzelleneinheit sehr niedrig sind, ruft die auftretende Spannungsdifferenz zwischen den beiden Komponenten einen erheblichen Strom in der Parallelschaltung hervor, der unter Umständen zur Zerstörung einzelner Bauteile führt.

Erfindungsgemäß sieht das Antriebssystem vor, dass die kapazitive Energiespeichereinheit derart dimensioniert ist, so dass der Ladestrom der Energiespeichereinheit bzw. der von der Brennstoffzelleneinheit erzeugte Strom unterhalb einer vorgegebenen Schwelle liegen. Demnach ist also die elektrische Energiespeichereinheit so ausgelegt, dass die auftretende Differenzspannung zwischen den beiden Komponenten soweit minimiert ist, dass der durch die Spannung hervorgerufene Strom innerhalb der Parallelschaltung einen definierten sicheren Grenzwert nicht überschreitet. Mittels der erfindungsgemäßen Schaltungsanordnung des Antriebssystems kann vollständig auf den Einsatz der voluminösen und teuren DC/DC-Wandler verzichtet werden.

Denkbar ist, dass die kapazitive Energiespeichereinheit eine Superkondensatoreinheit ist. Die Dimensionierung der Kondensatoreinheit zur Minimierung der auftretenden Differenzspannung zwischen den Spannungsabfällen an Brennstoffzelleneinheit und Kondensatoreinheit ist im Wesentlichen durch die Kapazität der verwendeten Kondensatoreinheit bestimmt. Demnach ist die Kapazität der Superkondensatoreinheit also derart dimensioniert, so dass der auftretende Ladestrom einen zulässigen Maximalwert nicht überschreitet.

Zur Vermeidung der Energierückspeisung in die Brennstoffzelleneinheit während des generatorischen Betriebs der Antriebsmotoren ist bevorzugt ein Diodenmodul mit der Brennstoffzelleneinheit in Reihe geschaltet. Durch die Ausrichtung der Diode in Sperrrichtung ist ein Stromfluß vom Antriebsmotor zur Brennstoffzelleneinheit ausgeschlossen.

Denkbar ist, dass ein oder mehrere separate elektrische Energiespeicher bzw. Energieverbraucher innerhalb des Antriebssystems vorgesehen sind. Die separaten elektrischen Energiespeicher bzw. Verbraucher dienen zur Versorgung beliebiger elektrischer Komponenten der Arbeitsmaschine, die nicht im Antriebssystem integriert sind. Als Beispiel sei die Versorgung eines Niedervolt-Bordnetzes genannt. Besonders bevorzugt wird der separate elektrische Energiespeicher eines Bordnetzes über ein zwischengeschaltetes Ladegerät mittels der Zwischenkreisspannung des erfindungsgemäßen Antriebssystems geladen. Als Zwischenkreisspannung wird die anliegende Spannung zwischen Parallelschaltung und Antriebsmotor bzw. zwischengekoppelten Wechselrichter verstanden.

Um eine Zerstörung des Antriebssystems im Falle einer vollständig geladenen Energiespeichereinheit zu verhindern, ist vorteilhafterweise ein schaltbarer Bremswiderstand vorgesehen, der die überschüssige elektrische Energie verbraucht oder insbesondere als Wärmeenergie abgibt. Der Bremswiderstand ist nur bei Bedarf in das Versorgungsnetz des Antriebssystems mittels einer zwischengeschalteten Schalteinheit einkoppelbar.

Zweckmäßig ist der Einsatz einer zentralen Steuereinheit, die die Regelung der durch das Antriebssystem erzeugten Zwischenkreisspannung zur Speisung der Antriebsmotoren übernimmt. Die Steuereinheit nimmt hierzu Einfluss auf die Energiegenerierung der Brennstoffzelleneinheit über vorhandene Stellglieder innerhalb der Brennstoffzelleneinheit. Besonders bevorzugt ist die zentrale Steuereinheit derart ausgeführt, so dass die Regelung der Zwischenkreisspannung in Abhängigkeit des durch die Antriebsmotoren erzeugten Lastprofils erfolgt. Ferner können zweckmäßig weitere Betriebsparameter des Antriebssystems, wie die maximal zulässige Belastung der Brennstoffzelleneinheit und bzw. oder der aktuelle Ladezustand der Superkondensatoreinheit, in die durchgeführte Regelung einfließen.

Um eine alternative Versorgung des erfindungsgemäßen Antriebssystems mit Ersatzkraftstoffen zu ermöglichen, umfaßt die Brennstoffzelleneinheit vorteilhafterweise einen Reformer. Hierdurch ist eine Versorgung der Brennstoffzelleneinheit mit herkömmlichen Kraftstoffen, insbesondere mit kohlenwasserstoffhaltigen Gasen oder Flüssigkeiten anstatt der direkten Wasserstoffeinspeisung denkbar.

Die vorliegende Erfindung betrifft des weiteren eine Arbeitsmaschine mit einem Antriebssystem zum Betrieb der Arbeitsmaschine, wobei das Antriebssystem gemäß einem der Ansprüche 1 bis 8 ausgeführt ist. Die Brennstoffzelleneinheit zur Energieversorgung der Arbeitsmaschine hat einen deutlich höheren Wirkungsgrad als bekannte Dieselgeneratoren. Darüber hinaus erzeugen die Brennstoffzellen der Brennstoffzelleneinheit keine Schadstoffemissionen. Ferner wird der Betriebsgeräuschpegel der erfindungsgemäßen Arbeitsmaschine erheblich reduziert, da die Energieerzeugung der Brennstoffzelleneinheit keine Betriebsgeräusche verursacht. Der Verzicht auf die teuren und voluminösen DC/DC-Wandler bringt eine erhebliche Produktionskostenersparnis mit sich.

Denkbar ist es, dass die verwendete Brennstoffzelleneinheit die primäre Energiequelle des Antriebssystems der Arbeitsmaschine darstellt. Möglich ist, dass die Arbeitsmaschine eine oder mehrere alternative Energiequellen zur Versorgung des Antriebssystems aufweist, wobei jedoch der größte Energieanteil von der Brennstoffzelleneinheit bezogen wird. Im Gegensatz dazu ist selbstverständlich eine vollständige Versorgung des Antriebssystems mittels der wenigstens einen Brennstoffzelleneinheit denkbar. Besonders bevorzugt stellt die Energiespeichereinheit die primäre Energiequelle dar und wird lediglich hilfsweise während Lastspitzen durch die Brennstoffzelleneinheit unterstützt.

In einer besonders bevorzugten Ausgestaltung der Erfindung ist die Arbeitsmaschine ein Kran, insbesondere ein Container- oder Schiffskran, der das erfindungsgemäße Antriebssystem aufweist.

Weitere Merkmale, Einzelheiten und Vorteile der Erfindung werden anhand der in den Zeichnungen dargestellten Ausführungsbeispiele näher erläutert. Es zeigen:

Figur 1:     ein Schaltbild eines Antriebssystems gemäß dem Stand der Technik,

Figur 2:     ein Schaltbild des erfindungsgemäßen Antriebssystems und

Figur 3:     ein Schaltbild einer alternativen Ausführungsmöglichkeit des erfindungsgemäßen Antriebssystems.

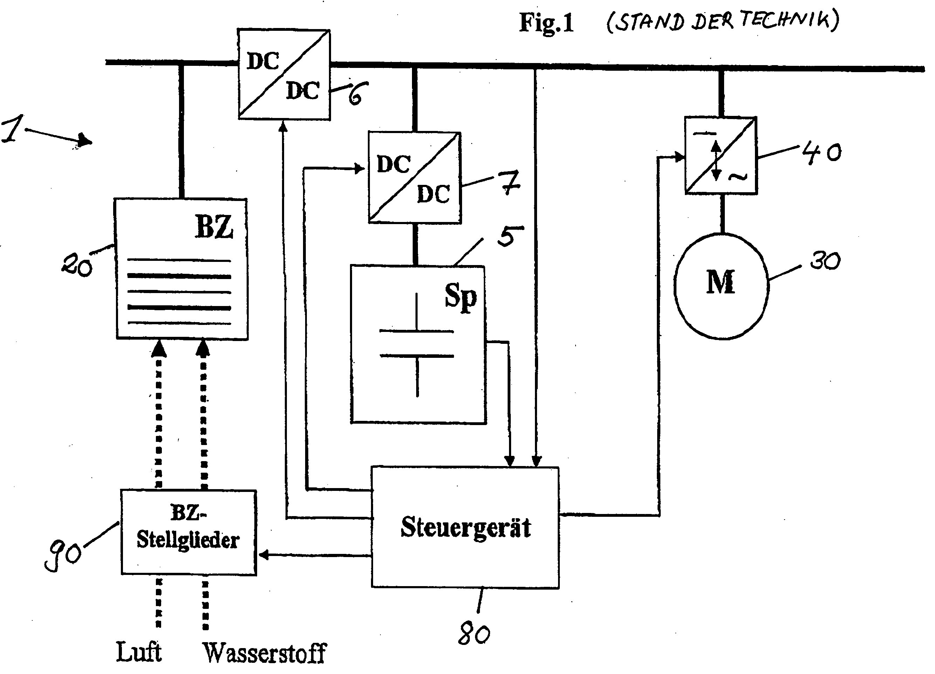

Figur 1 zeigt ein aus dem Stand der Technik bekanntes Antriebssystem 1 mit einer Brennstoffzelle. Das Antriebssystem 1 sieht einen Wechselstrommotor 30 vor, der eine Arbeitsmaschine oder dergleichen antreibt. Als primäre Energiequelle dient die Brennstoffzelleneinheit 20, die im Gegensatz zu einer Dieseigeneratoreinheit einen deutlich höheren Wirkungsgrad erzielt.

Zur Energierückgewinnung arbeitet der Wechselstrommotor 30 im Generatorbetrieb und speist die gewonnene Energie über den bidirektionalen DC/DC-Wandler 7 in die elektrische Energiespeichereinheit 5 ein. Der zwischengekoppelte Wechselrichter 40 richtet die erzeugte Gleichspannung der Brennstoffzelleneinheit zur erforderlichen Betriebswechselspannung des Wechselstrommotors 30 um.

Die Brennstoffzelleneinheit 20 speist über den unidirektionalen DC/DC-Wandler 6 den Wechselstrommotor 30. Im Fall eines erhöhten Leistungsverbrauchs des Wechselstrommotors 30 wird der erforderliche Leistungsbedarf simultan von der Brennstoffzelleneinheit 20 und der elektrischen Energiespeichereinheit 5 abgedeckt. Die gegenseitige Entkopplung der beiden Energiequellen wird durch die verschalteten DC/DC-Wandler 6, 7 erreicht. Zum einen lässt sich die Energiespeichereinheit 5 über den Wechselstrommotor 30 im Generatorbetrieb aufladen, zum anderen kann vorgesehen sein, dass eine Aufladung der elektrischen Energiespeichereinheit 5 während bestimmter Kranphasen über die Verbindung der beiden DC/DC-Wandler 6, 7 mittels der Brennstoffzelleneinheit 20 erfolgt.

Zur Steuerung des Antriebssystems 1 ist die zentrale Steuereinheit 80 vorgesehen. Hierzu erhält die Steuereinheit 80 interne Betriebsparameter des Antriebssystems 1, die sowohl Informationen über den aktuellen Ladungszustand der Energiespeichereinheit 5 als auch Informationen über die zwischen den DC/DC-Wandlern 6, 7 und dem Wechselrichter 40 anliegende Zwischenkreisspannung $U_{ZK}$ beinhaltet, In Abhängigkeit dieser Parameter erfolgt die Ansteuerung der innerhalb der Brennstoffzelleneinheit 20 integrierten Stellglieder 90. Hierdurch lässt sich beispielsweise die erzeugte Gleichspannung am Ausgang der Brennstoffzelleneinheit 20 beeinflussen. Des weiteren sieht die Steuereinheit 80 eine Verstellmöglichkeit der beiden DC/DC-Wandler 6, 7 sowie eine Einflußnahme auf den Wechselrichter 40 zum Betrieb des Wechselstrommotors 30 vor.

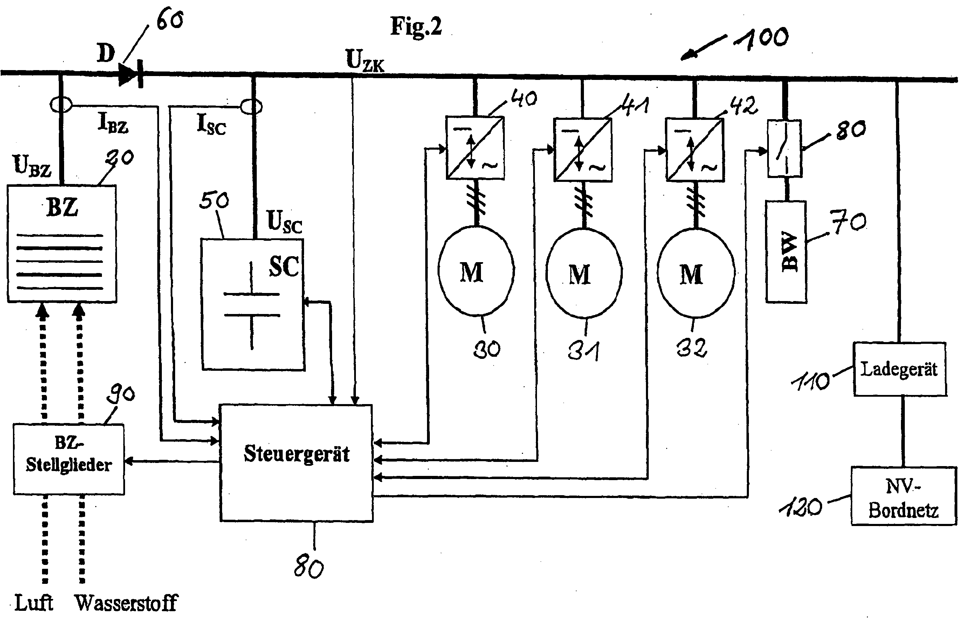

Das erfindungsgemäße Antriebssystem 100 ist der Figur 2 zu entnehmen und dient beispielsweise zum Antrieb eines Krans. Das dargestellte Antriebssystem 100 beschreibt eine vereinfachte Lösung für einen brennstoffzellengespeisten Kran mit elektrischem Energiespeichersystem zur Energierückgewinnung. Die vorgeschlagene Konfiguration des erfindungsgemäßen Antriebssystems 100 ist im Vergleich zu dem brennstoffzellengespeisten Antrieb 1 aus Figur 1 deutlich vereinfacht, da auf die teuren und voluminösen DC/DC-Wandler 6, 7 verzichtet wird. Die vorgeschlagene Anordnung gemäß Figur 2 besteht aus einer Brennstoffzelleneinheit 20, einer Superkondensatoreinheit 50, einem Bremswiderstand 70 und den elektrischen Antrieben 30, 31, 32. Die gezeigten Antriebe sind beispielsweise für den Antrieb des Hubwerks, des Fahrwerks oder sonstiger Krankomponenten zuständig.

Alle drei Antriebsmotoren 30, 31, 32 sind als Wechselstrommotoren ausgeführt, die über die Wechselrichter 40, 41, 42 an das Gleichstromnetz der Zwischenkreisspannung $U_{ZK}$ des Antriebssystems 100 angeschlossen sind. Die benötigte Energie für die Antriebe 30, 31, 32 während der Kranbewegung mittels des Kranfahrwerks bzw. einer Laufkatze oder während des Hubvorgangs des Hebewerks wird hauptsächlich durch die Superkondensatoreinheit 50 geliefert. Alle oder ein Teil der einzelnen Antriebe 30, 31, 32 laden im Bremsbetrieb bzw. beim Senken einer am Hubseil angeschlagenen Last die Kondensatoreinheit 50 auf, in dem die Antriebsmotoren 30, 31, 32 als Energiegeneratoren arbeiten.

Zum Schutz der innerhalb des Antriebssystems 100 verbauten Komponenten kann optional der Bremswiderstand 70 über den Schalter 80 mit der Zwischenkreisspannung des Antriebssystems 100 verschaltet werden, falls die Superkondensatoreinheit 50 während des generatorischen Betriebs der Antriebe 30, 31, 32 bereits vollständig aufgeladen ist.

Um die Energierückspeisung während des generatorischen Betriebs der Antriebe 30, 31, 32 in die Brennstoffzelleneinheit 20 zu verhindern, ist das Diodenmodul 60 mit der Brennstoffzelleneinheit 20 in Reihe geschaltet. Die Ausrichtung des Diodenmoduls 60 in Sperrrichtung unterbindet den Stromfluß zur Brennstoffzelleneinheit 20.

Ferner dient das Ladegerät 110 zur Speisung eines extern angeordneten Bordnetzes 120, das die Versorgung beliebiger Kleinkomponenten des Krans, insbesondere der Steuereinheit 80, bewerkstelligt. Da ein derartiges Bordnetz 120 in der Regel im Niedervoltbereich arbeitet, ist die Bordnetzbatterie des Bordnetzes 120 über das Ladegerät 110 an die Zwischenkreisspannung $U_{ZK}$ des Antriebssystems 100 angeschlossen.

Die Brennstoffzelleneinheit 20 und die Superkondensatoreinheit 50 besitzen unterschiedliche Spannungsprofile, weshalb eine unmittelbare Parallelschaltung dieser Einheiten zu einer erhöhten Belastung der beiden Komponenten führt. Normalerweise wird bei Brennstoffzellen von einem Spannungsabfall von 40% der Zwischenkreisspannung $U_{ZK}$ während dem Volllastbetrieb ausgegangen. Gleichzeitig stellt sich an der Superkondensatoreinheit 50 während des Volllastbetriebs ein Spannungsabfall von 50% der Zwischenkreisspannung $U_{ZK}$ ein. Folglich ergibt sich eine Spannungsdifferenz von 10% zwischen den beiden Komponenten 20, 50 innerhalb der Parallelschaltung. Derartige Spannungsabweichungen von parallel geschalteten Energiequellen führen zu Ausgleichsströmen, die aufgrund der äußerst geringen internen Widerstände der Superkondensatoreinheit 50 und der Brennstoffzelleneinheit 20 einen erheblichen Stromfluß hervorrufen. Es gilt die auftretenden Stromwerte zu begrenzen um Beschädigungen der Bauteile des erfindungsgemäßen Antriebs 100 zu vermeiden. Dies erfolgt erfindungsgemäß durch die passende Dimensionierung der verwendeten Superkondensatoreinheit 50. Die Spannungsdifferenz zwischen dem Spannungsabfall $U_{SC}$ an der Kondensatoreinheit 50 während der Volllast, das heißt bei einem tiefentladenen Kondensator, und dem Spannungsabfall $U_{BZ}$ an der Brennstoffzelleneinheit 20 wird minimiert. Die Reduzierung der auftretenden Spannungsdifferenz begrenzt den erzeugten Ladestrom $I_{SC}$ der Kondensatoreinheit 50 bzw. den Strom $I_{BZ}$ der Brennstoffzelleneinheit 20 auf einen zulässigen Maximalwert

Zur Verdeutlichung der erforderlichen Anpassung der Superkondensatoreinheit 50 sei das folgende Beispiel aufgeführt. Gesucht ist die passende Dimensionierung der Kondensatoreneinheit 50, die im tiefentladenen Zustand der Kondensatoreinheit 50 einen Spannungsabfall $U_{SC}$ = X% $U_{ZK}$ an der Kondensatoreinheit 50 bewirkt. Ausgehend von einer maximal belasteten Brennstoffzelleneinheit 20 mit einem Spannungsabfall $U_{BZ}$ = 60% $U_{ZK}$ ergibt sich der Ladestrom $I_{SC}$ der Kondensatoreinheit 50 bzw. der von der Brennstoffzelleneinheit 20 erzeugte Strom $I_{BZ}$ aus der Gleichung:

$$I_{BZ,SC} = \frac{U_{BZ} - U_{SC}}{R_{BZ} + R_{SC}} = \frac{(60 - X) \times U_{ZK}}{100 \times (R_{BZ} + R_{SC})} \le I_{BZ.Max}, I_{SC.Max}$$

Der Faktor X steht hierbei für den sich an der Superkondensatoreinheit 50 prozentual einstellenden Spannungsabfall. Dieser Faktor birgt eine Abhängigkeit von der Dimensionierung der Superkondensatoreinheit 50 in sich, wobei vor allem die Kapazität der Kondensatoreinheit 50 einen wesentlichen Einflussfaktor darstellt. Diese muss demnach so definiert werden, dass die oben berechnete Bedingung erfüllt wird.

Bei der Auslegung der Superkondensatoreinheit 50 wird normalerweise davon ausgegangen, dass der gewünschte Energiebedarf mit 75% von der gespeicherten Energie abgedeckt wird. Diese Bedingung entspricht einem Spannungshub von 50% der Zwischenkreisspannung $U_{ZK}$, die sich zwischen der Parallelschaltung und dem Wechselrichter 40, 41, 42 der Antriebsmotoren 30, 31, 32 einstellt. Wird die Kapazität der Kondensatoreinheit 50 so dimensioniert, dass der auftretende Spannungsabfall an Superkondensatoreinheit 50 bei Volllast etwa 55% der Zwischenkreisspannung $U_{ZK}$ beträgt und gleichzeitig eine Klemmspannung der Brennstoffzelleneinheit 20 $U_{BZ}$ = 60% $U_{ZK}$ vorgegeben ist, so stellt sich eine minimale Spannungsdifferenz zwischen den beiden Komponenten von 5% ein. Eine derartige Anordnung ermöglicht eine 70%-ige Ausnutzung der maximal gespeicherten Energie. Diese fällt zwar im Vergleich zur Nutzungsleistung von 75% mit einer Schaltungsanordnung nach Figur 1 vergleichsweise minimal geringer aus, ist jedoch im Hinblick auf die Kosteneinsparung bezüglich der Aussparung der beiden DC/DCWandler 6, 7 dennoch besonders vorteilhaft. Dem gegenüber nachteilig steht auch nicht die erforderliche 5%-ige Kapazitätserhöhung der verwendeten Superkondensatoreinheit 50.

Die Spannungsreglung der Zwischenkreisspannung $U_{ZK}$ wird durch die kontinuierliche Regelung der Brennstoffzelleneinheit 20 in Abhängigkeit des Lastprofils, der maximal zulässigen Belastung der Brennstoffzelleneinheit und des Ladezustands der Superkondensatoreinheit 50 mittels der Steuereinheit 80 ausgeführt.

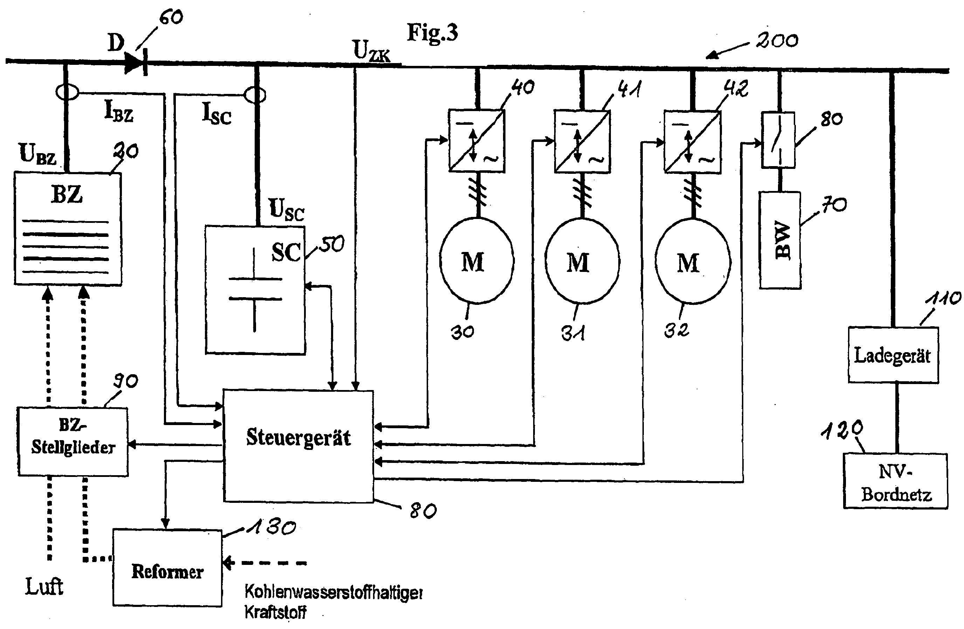

Eine alternative Ausführung des erfindungsgemäßen Antriebssystems ist gemäß Figur 3 realisiert. Das gezeigte Schaltbild des Antriebssystems 200 entspricht im wesentlichen der Ausführung der Figur 2. Anstelle der direkten Wasserstoffeinspeisung wird die Brennstoffzelleneinheit 20 mit einem Reformer 130 ausgerüstet. Hierdurch lässt sich die Brennstoffzelleneinheit 20 mit herkömmlichen Kraftstoffen, wie beispielsweise kohlenwasserstoffhaltige Gase oder Flüssigkeiten betreiben. Ferner ist eine Kontrollmöglichkeit des verwendeten Reformers durch die Steuereinheit 80 gegeben.

**Patentansprüche**

1. Antriebssystem (100) mit Energierückgewinnung zum Antrieb einer Arbeitsmaschine, insbesondere zum Antrieb eines Krans, wobei das Antriebssystem (100) wenigstens eine Brennstoffzelleneinheit (20), wenigstens eine kapazitive Energiespeichereinheit (50) und wenigstens einen Antriebsmotor (30, 31, 32) aufweist, und wobei die Brennstoffzelleneinheit (20) und die Energiespeichereinheit (50) parallel verschaltet sind und wenigstens einen Antriebsmotor speisen (30, 31, 32), wobei die Brennstoffzelleneinheit (20) und die Energiespeichereinheit (50) ohne DC/DC-Wandler miteinander und mit den restlichen Antriebskomponenten direkt gekoppelt sind,
**dadurch gekennzeichnet,**
**dass** die kapazitive Energiespeichereinheit (50) derart dimensioniert ist, so dass die während des Betriebes auftretende Differenzspannung ($U_{BZ}$-$U_{SC}$) zwischen der Brennstoffzelleneinheit (20) und der kapazitiven Energiespeichereinheit (50) soweit minimiert ist, dass der durch die Spannung aufgrund der Summe der internen Widerstande ($R_{BZ}$+$R_{SC}$) der Brennstoffzelleneinheit (20) und der Energiespeichereinheit (50) hervorgerufene Strom ($I_{BZ,SC}$) innerhalb der Parallelschaltung aus Brennstoffzelleneinheit (20) und Energiespeichereinheit (50) einen definierten sicheren Grenzwert nicht überschreitet.

2. Antriebssystem gemäß Anspruch 1, **gekennzeichnet dadurch, dass** die kapazitive Energiespeichereinheit (50) eine Superkondensatoreinheit ist, deren Kapazität entsprechend angepaßt ist.

3. Antriebssystem gemäß Anspruch 1 oder 2, **gekennzeichnet dadurch, dass** ein Diodenmodul (60) mit der Brennstoffzelleneinheit (20) in Reihe geschaltet ist.

4. Antriebssystem gemäß Anspruch 1, 2 oder 3, **gekennzeichnet dadurch, dass** wenigstens ein weiterer separater elektrischer Energiespeicher (120) vorgesehen ist, der über ein Ladegerät (110) durch die Zwischenkreisspannung $U_{ZK}$ versorgt ist.

5. Antriebssystem nach einem der Ansprüche 1 bis 4, **gekennzeichnet dadurch, dass** ein schaltbarer Bremswiderstand (70) zur Vernichtung erzeugter elektrischer Energie vorgesehen ist.

6. Antriebssystem nach einem der Ansprüche 1 bis 5, **gekennzeichnet dadurch, dass** eine Steuereinheit (80) zur Regelung der Zwischenkreisspannung $U_{ZK}$ vorgesehen ist.

7. Antriebssystem nach Anspruch 6, **gekennzeichnet dadurch, dass** die Steuereinheit (80) derart ausgeführt ist, so dass die Regelung in Abhängigkeit des Lastprofils und/oder der maximal zulässigen Belastung der Brennstoffzelleneinheit (20) und/oder des Ladezustands der Superkondensatoreinheit (50) erfolgt.

8. Antriebssystem nach einem der Ansprüche 1 bis 7, **gekennzeichnet dadurch, dass** die Brennstoffzelleneinheit (20) einen Reformer (130) aufweist.

9. Arbeitsmaschine mit einem Antriebssystem (100) zum Betrieb der Arbeitsmaschine, wobei das Antriebssystem (100) wenigstens einen Antriebsmotor (30, 31, 32) aufweist,
**dadurch gekennzeichnet,**
**dass** das Antriebssystem (100) gemäß einem der Ansprüche 1 bis 8 ausgeführt ist.

10. Arbeitsmaschine nach Anspruch 9, **dadurch gekennzeichnet, dass** die Brennstoffzelleneinheit (20) und/oder die Energiespeichereinheit (50) die primäre Energiequelle der Arbeitsmaschine darstellen.

11. Arbeitsmaschine nach Anspruch 9 oder 10, **dadurch gekennzeichnet, dass** die Arbeitsmaschine ein Kran, insbesondere ein Container- oder Schiffskran ist.

**Claims**

1. A drive system (100) with energy recovery for driving a machine, in particular for driving a crane, wherein the drive system (100) includes at least one fuel cell unit (20), at least one capacitive energy storage unit (50) and at least one drive motor (30, 31, 32), and wherein the fuel cell unit (20) and the energy storage unit (50) are connected in parallel and feed at least one drive motor (30, 31, 32), wherein the fuel cell unit (20) and the energy storage unit (50) are directly coupled with each other and with the remaining drive components without DC/DC converter,
**characterized in that**
the capacitive energy storage unit (50) is dimensioned such that the differential voltage ($U_{BZ}$-$U_{SC}$) occurring during operation between the fuel cell unit (20) and the capacitive energy storage unit (50) is minimized due to the sum of the internal resistances ($R_{BZ} + R_{SC}$) of the fuel cell unit (20) and the energy storage unit (50) to such an extent that the current ($I_{BZ,SC}$) caused by the voltage within the parallel connection of fuel cell unit (20) and energy storage unit (50) does not exceed a defined safe limit value.

2. The drive system according to claim 1, **characterized in that** the capacitive energy storage unit (50) is a supercapacitor unit whose capacitance is adapted correspondingly.

3. The drive system according to claim 1 or 2, **characterized in that** a diode module (60) is connected in series with the fuel cell unit (20).

4. The drive system according to claim 1, 2 or 3, **characterized in that** at least one further separate electric energy accumulator (120) is provided, which via a charger (110) is supplied with the intermediate circuit voltage $U_{ZK}$.

5. The drive system according to any of claims 1 to 4, **characterized in that** a switchable braking resistor (70) is provided for destroying generated electric energy.

**6.** The drive system according to any of claims 1 to 5, **characterized in that** a control unit (80) is provided for controlling the intermediate circuit voltage $U_{ZK}$.

**7.** The drive system according to claim 6, **characterized in that** the control unit (80) is configured such that the control is effected in dependence on the load profile and/or the maximum admissible load of the fuel cell unit (20) and/or the charging condition of the supercapacitor unit (50).

**8.** The drive system according to any of claims 1 to 7, **characterized in that** the fuel cell unit (20) includes a reformer (130).

**9.** A machine with a drive system (100) for operation of the machine, wherein the drive system (100) includes at least one drive motor (30, 31, 32),
**characterized in that**
the drive system (100) is configured according to any of claims 1 to 8.

**10.** The machine according to claim 9, **characterized in that** the fuel cell unit (20) and/or the energy storage unit (50) represent the primary energy source of the machine.

**11.** The machine according to claim 9 or 10, **characterized in that** the machine is a crane, in particular a container or deck crane.

**Revendications**

**1.** Système d'entraînement (100) à récupération d'énergie destiné à entraîner une machine de travail, en particulier à entraîner une grue, le système d'entraînement (100) comportant au moins une unité de pile à combustible (20), au moins une unité d'accumulation d'énergie (50) capacitive et au moins un moteur d'entraînement (30, 31, 32), et l'unité de pile à combustible (20) et l'unité d'accumulation d'énergie (50) étant branchées en parallèle et alimentant au moins un moteur d'entraînement (30, 31, 32), l'unité de pile à combustible (20) et l'unité d'accumulation d'énergie (50) étant couplées directement sans convertisseur continu-continu l'une à l'autre et au reste des composants d'entraînement,
**caractérisé en ce que**
l'unité d'accumulation d'énergie (50) capacitive est dimensionnée de telle manière que la tension différentielle $(U_{BZ}\text{-}U_{SC})$ apparaissant pendant le fonctionnement entre l'unité de pile à combustible (20) et l'unité d'accumulation d'énergie (50) capacitive est minimisée dans une telle mesure que le courant $(I_{BZ,SC})$ engendré par la tension en raison de la somme des résistances internes $(R_{BZ} + R_{SC})$ de l'unité de pile à combustible (20) et de l'unité d'accumulation d'énergie (50) ne dépasse pas une valeur limite sûre définie au sein du branchement en parallèle constitué de l'unité de pile à combustible (20) et de l'unité d'accumulation d'énergie (50).

**2.** Système d'entraînement selon la revendication 1, **caractérisé en ce que** l'unité d'accumulation d'énergie (50) capacitive est une unité de supercondensateur dont la capacité est adaptée en conséquence.

**3.** Système d'entraînement selon la revendication 1 ou 2, **caractérisé en ce qu'**un module de diodes (60) est branché en série avec l'unité de pile à combustible (20).

**4.** Système d'entraînement selon la revendication 1, 2 ou 3, **caractérisé en ce qu'**au moins un autre accumulateur d'énergie (120) électrique séparé est prévu, qui est alimenté par la tension de circuit intermédiaire $U_{ZK}$ par le biais d'un chargeur (110).

**5.** Système d'entraînement selon l'une des revendications 1 à 4, **caractérisé en ce qu'**une résistance de freinage (70) commutable est prévue pour la suppression d'énergie électrique générée.

**6.** Système d'entraînement selon l'une des revendications 1 à 5, **caractérisé en ce qu'**une unité de commande (80) est prévue pour la régulation de la tension de circuit intermédiaire $U_{ZK}$.

**7.** Système d'entraînement selon la revendication 6, **caractérisé en ce que** l'unité de commande (80) est réalisé de telle manière que la régulation se fait en fonction du profil de charge et/ou de la charge maximale admissible de l'unité de pile à combustible (20) et/ou de l'état de charge de l'unité de supercondensateur (50).

8. Système d'entraînement selon l'une des revendications 1 à 7, **caractérisé en ce que** l'unité de pile à combustible (20) comporte un reformeur (130).

9. Machine de travail comprenant un système d'entraînement (100) destiné à faire fonctionner la machine de travail, le système d'entraînement (100) comportant au moins un moteur d'entraînement (30, 31, 32),
**caractérisée en ce que**
le système d'entraînement (100) est réalisé selon l'une des revendications 1 à 8.

10. Machine de travail selon la revendication 9, **caractérisée en ce que** l'unité de pile à combustible (20) et/ou l'unité d'accumulation d'énergie (50) représentent la source d'énergie primaire de la machine de travail.

11. Machine de travail selon la revendication 9 ou 10, **caractérisée en ce que** la machine de travail est une grue, en particulier une grue à conteneurs ou une grue de navire.

Fig.1 (STAND DER TECHNIK)

Fig.2

Fig.3

**IN DER BESCHREIBUNG AUFGEFÜHRTE DOKUMENTE**

**In der Beschreibung aufgeführte Patentdokumente**

- US 2002172847 A
- US 2003118876 A
- JP 2006236619 B
- JP 006318818 B
- US 2006127704 A